(19) Europäisches Patentamt / European Patent Office / Office européen des brevets

(11) EP 3 447 544 B1

(12) # EUROPEAN PATENT SPECIFICATION

(45) Date of publication and mention of the grant of the patent:
**02.09.2020 Bulletin 2020/36**

(21) Application number: **17834824.9**

(22) Date of filing: **28.07.2017**

(51) Int Cl.:
***G02B 1/14*** (2015.01) ***G02B 1/04*** (2006.01)
***G02B 5/30*** (2006.01) ***C09D 133/10*** (2006.01)
***C09D 133/08*** (2006.01) ***C08J 5/18*** (2006.01)
***C08L 67/03*** (2006.01)

(86) International application number:
**PCT/KR2017/008183**

(87) International publication number:
**WO 2018/021883 (01.02.2018 Gazette 2018/05)**

(54) **OPTICAL FILM FOR POLARIZER PROTECTION, AND POLARIZING PLATE AND IMAGE DISPLAY DEVICE COMPRISING SAME**

OPTISCHER FILM ZUM POLARISATORSCHUTZ UND POLARISATIONSPLATTE UND BILDANZEIGEVORRICHTUNG DAMIT

FILM OPTIQUE POUR LA PROTECTION D'UN POLARISEUR, ET PLAQUE DE POLARISATION ET DISPOSITIF D'AFFICHAGE D'IMAGES LE COMPRENANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.07.2016 KR 20160096442**

(43) Date of publication of application:
**27.02.2019 Bulletin 2019/09**

(73) Proprietor: **LG Chem, Ltd.**
**Seoul 07336 (KR)**

(72) Inventors:
- **SEO, Jung Hyun**
  **Daejeon 34122 (KR)**
- **CHANG, Yeong Rae**
  **Daejeon 34122 (KR)**
- **BYUN, Jin Seok**
  **Daejeon 34122 (KR)**
- **KIM, Jae Young**
  **Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
**JP-A- 2013 174 856** **JP-A- 2013 174 856**
**KR-A- 20150 080 748** **KR-A- 20150 114 150**
**KR-A- 20150 135 150** **KR-A- 20160 083 585**
**KR-A- 20160 083 585** **US-A1- 2015 049 261**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### [Technical Field]

CROSS-REFERENCE TO RELATED APPLICATIONS

This application claims the benefit of priority from Korean Patent Application No. 10-2016-0096442 filed on July 28, 2016 and Korean Patent Application No. 10-2017-0095824 filed on July 28, 2017 with the Korean Intellectual Property Office.

The present invention relates to an optical film for protecting a polarizer which can effectively suppress the generation of interference fringes derived from a polyester-based substrate film and exhibit a low curling property, thereby being suitably applied as a polarizer protective film or the like; a polarizing plate and an image display device comprising the same.

### [Background]

Liquid crystal display devices have various advantages such as power-saving, light-weight, and thin type, and are used at the highest ratio among various display devices.

In these liquid crystal display devices, a polarizer is disposed on the image display surface of a liquid crystal cell. Therefore, in order to prevent damage on the polarizer when handling/using the liquid crystal display devices, it is generally known that a polarizer protecting film including a hard coating layer or the like having a hardness of a certain level or higher is applied onto the polarizer.

The polarizer protecting optical film generally takes the form where a hard coating layer is formed on a light-transmitting substrate film. As the light-transmitting substrate film, a cellulose ester-based film represented by triacetyl cellulose (TAC) is most widely used. Such a cellulose ester-based film has the advantages of having excellent transparency and optical isotropy, hardly showing in-plane retardation, thus generating no interference fringes, and hardly adversely affecting the display quality of a display device.

However, the cellulose ester-based film is a material having a disadvantage in terms of cost, and also has the disadvantages of having high moisture permeability and poor water resistance. Due to the high moisture permeability/poor water resistance, a considerable amount of water permeation may continuously occur during use, resulting in a phenomenon where the film is detached from the polarizer, thereby causing a light leakage.

Due to the disadvantages of the cellulose ester-based film, an attempt has recently been made to apply a polyester-based film, such as a polyethylene terephthalate-based film, as a substrate film for the optical film for protecting a polarizer. Such a polyester-based film has a low price and exhibits excellent water resistance, thus hardly showing the possibility of causing a light leakage, and also has excellent mechanical properties.

However, the polyester-based film contains an aromatic ring having a high refractive index in its structure and has a disadvantage in that it causes a difference in refractive indexes (in-plane birefringence) and in-plane retardation due to a difference in elongation in the MD/TD direction during a film-forming process. As a result, when the polyester-based film is used as a substrate film of an optical film for protecting a polarizer, the generation of interference fringes is induced due to transmission/reflection of light, thereby deteriorating the visibility of the display device.

These interference fringes can be largely generated when a light generated in a backlight unit penetrates the polyester-based substrate film, or when an external light is reflected from the polyester-base substrate film.

From the past, various attempts have been made to reduce the generation of interference fringes caused by these two factors. It is known that the generation of interference fringes caused by the first factor can be reduced by controlling the retardation of the substrate film. In addition, it is known that the generation of interference fringes caused by the second factor can be reduced by controlling the properties of a hard coating layer formed on the polyester-based substrate film. However, the composition and properties of the hard coating layer which can effectively reduce the generation of interference fringes caused by the second factor have not yet been proposed.

Moreover, when the generation of interference fringes is reduced by controlling the properties of the hard coating layer according to the conventional techniques, other properties of the hard coating layer and the substrate film including the same, for example, a curling property or the like may deteriorate. Thus, it is often impossible to properly apply the substrate film as a polarizer protective film.

KR 2016 0083585 A discloses a polarizing plate and a liquid crystal display comprising the same wherein the polarizing plate comprises a polarizer having a light incident surface and a light emit surface and an optical sheet formed on the light incident surface of the polarizer; and the optical sheet includes a substrate film and a reversed prism pattern layer formed on the light incident surface of the substrate film.

JP 2013 174856 A discloses an optical laminate comprising a polyester substrate; a primer layer formed on the substrate; and a hard coat layer formed on the primer layer.

**[Technical Problem]**

Accordingly, the present invention provides an optical film for protecting a polarizer which can effectively suppress the generation of interference fringes derived from a polyester-based substrate film and exhibit a low curling property, thereby being suitably applied as a polarizer protective film or the like.
Further, the present invention provides a polarizing plate comprising the optical film for protecting a polarizer.
The present invention further provides an image display device comprising the optical film or the polarizing plate.

**[Technical Solution]**

The above problems are solved in accordance with the subject-matter of the independent claims. Preferred embodiments result from the subclaims.
The present invention provides an optical film for protecting a polarizer comprising:

a polyester-based substrate film having a refractive index of 1.6 to 1.7; and
a hard coating layer formed on the substrate film and having a refractive index of 1.53 to 1.60 and a thickness of 13 to 25 $\mu$m,
wherein the hard coating layer includes a cross-linked copolymer of a first bifunctional or higher (meth)acrylate-based compound having an aromatic ring and a second (meth)acrylate-based compound having an aromatic ring with a structure different from that of the first (meth)acrylate-based compound.

The present invention also provides a polarizing plate comprising a polarizing element and the optical film for protecting a polarizer formed on the polarizing element.
In addition, the present invention provides an image display device comprising the optical film for protecting a polarizer or the polarizing plate.
Hereinafter, the optical film for protecting a polarizer, the polarizing plate and the image display device comprising the same according to specific embodiments will be described.
In the present specification, a photopolymerizable compound collectively refers to a compound which induces a cross-linking, curing or polymerization reaction when a light is irradiated, for example, when a visible light or ultraviolet light is irradiated.
Further, a fluorine-based compound refers to a compound containing at least one fluorine element in the compound.
Furthermore, a (meth)acryl refers to including both acryl and methacryl.
In addition, a (co)polymer refers to including both a co-polymer and a homopolymer.
Moreover, hollow silica particles refer to silica particles derived from a silicon compound or an organosilicon compound, in which empty voids are present on the surface and/or inside of the silica particles.
Further, the phrase "the aromatic ring structure of the second acrylate-based compound has a structure different from that of the aromatic ring of the first acrylate-based compound" may mean that the number of aromatic rings contained in each compound is different, or for example, when the number of aromatic rings is plural, it may mean a difference in the presence or absence of a carbon-containing linking group connecting the aromatic rings or whether carbon atoms of these linking groups or the aromatic rings are connected by a pi-bond (for example, a naphthalene structure or an anthracene structure, etc.).
Meanwhile, according to one embodiment of the present invention, there is provided an optical film for protecting a polarizer comprising:

a polyester-based substrate film having a refractive index of 1.6 to 1.7; and
a hard coating layer formed on the substrate film and having a refractive index of 1.53 to 1.60 and a thickness of 13 to 25 $\mu$m,
wherein the hard coating layer includes a cross-linked copolymer of a first bifunctional or higher (meth)acrylate-based compound having an aromatic ring and a second (meth)acrylate-based compound having an aromatic ring with a structure different from that of the first (meth)acrylate-based compound.

The present inventors have conducted extensive and intensive studies and experiments, and found that as the refractive index of the hard coating layer is controlled so as to exhibit the smallest difference from the refractive index of the substrate film in consideration of the refractive index of the polyester-based substrate film, for example, to have a refractive index of 1.53 to 1.60 or 1.53 to 1.56, or 1.54 to 1.56, the interference fringes showing when an external light is reflected from the polyester-base substrate film could be significantly reduced.
In addition, in consideration of the generally applied thickness of the polyester-based substrate, for example,

a thickness of 30 to 200 $\mu$m or 40 to 150 $\mu$m, as the thickness of the hard coating layer is controlled to an appropriate level, for example, to a level of 13 to 25 $\mu$m, 15 to 25 $\mu$m, or 16 to 20 $\mu$m, destructive interference is generated, thereby further reducing the generation of interference fringes. As a result, it has been found that even when the polyester-based substrate film is applied, the visibility of the image display device could be improved, compared to a cellulose ester-based film.

If either of the refractive index or the thickness of the hard coating layer cannot be controlled to an appropriate range, the interference fringes by the application of the polyester-based substrate film are generated as supported by Examples and Comparative Examples described below, thereby confirming that the visibility of the image display device is significantly lowered.

Meanwhile, it has found that the above-described refractive index and appropriate thickness of the hard coating layer, and interference fringe suppressing property and visibility resulting therefrom, etc. can be achieved by applying a specific binder, that is, a bifunctional or higher unsaturated compound having an aromatic ring with a high refractive index and high stiffness, more specifically, a cross-linked copolymer of a first bifunctional or higher (meth)acrylate-based compound having an aromatic ring and a second (meth)acrylate-based compound having an aromatic ring with a structure different from that of the first (meth)acrylate-based compound.

When such a specific binder is applied, not only the hard coating layer having an appropriate thickness range as described above can exhibit the refractive index described above, but also the optical properties of the hard coating layer are optimized so that the generation of interference fringes can be minimized, while contraction caused by curing can be properly controlled during photocuring, whereby the mechanical properties and heat resistance/moisture resistance of the hard coating layer are optimized, and so the optical film can exhibit a low curling property. In contrast, when a typical polyfunctional (meth)acrylate-based compound having no aromatic ring is used, or when only one kind of polyfunctional (meth)acrylate-based compound having an aromatic ring is used, it has been found that the properties of one embodiment described above could not be expressed.

Accordingly, the optical film of one embodiment minimizes the generation of interference fringes and also exhibits an excellent curling property even while including the polyester-based substrate film, as compared to the case where a cellulose ester-based substrate is applied, thereby being preferably applied as an optical film for protecting a polarizer.

Hereinafter, the optical film of one embodiment will be described in detail for each element.

The optical film of one embodiment includes a polyester-based substrate film exhibiting light transmittance at least to visible lights. As such a polyester-based substrate film, a film including any polyester resins known to be applicable as a substrate film of an optical film from the past can be applied without particular limitation.

However, in order to exhibit excellent mechanical properties and water resistance of the substrate film, and to appropriately protect a polarizer, the polyester-based substrate film is appropriately a polyethylene terephthalate (PET)-based substrate film having a thickness of 30 to 200 $\mu$m or 40 to 150 $\mu$m.

In addition, the optical film of one embodiment comprises a hard coating layer formed on the substrate film. As already described above, since the thickness and refractive index of the hard coating layer are controlled to an appropriate level, the interference fringes caused by the polyester-base substrate film can be significantly reduced, and the visibility of the image display device can be significantly improved.

In order to satisfy these thickness and refractive index properties and to allow the optical film to exhibit a low curling property and an interference fringe suppressing property, the hard coating layer may include a cross-linked copolymer which is photocured by using a first bifunctional or higher (meth)acrylate-based compound having an aromatic ring together with a second (meth)acrylate-based compound having an aromatic ring having a structure different from that of the first (meth)acrylate-based compound.

As already described above, the phrase "the aromatic ring structure of the second acrylate-based compound has a structure different from that of the aromatic ring of the first acrylate-based compound" may mean that the numbers of aromatic rings contained in each compound are different from each other, or for example, when the numbers of aromatic rings are plural, it may differ in terms of the presence or absence of a carbon-containing linking group connecting the aromatic rings or whether carbon atoms of these linking groups or the aromatic rings are connected by a pi-bond (for example, a naphthalene structure or an anthracene structure, etc.).

Among them, as the first (meth)acrylate-based compound, for example, a polyfunctional compound having at least one, for example, two benzene rings and a bifunctional to hexafunctional (meth)acrylate groups may be used, and examples thereof include a compound represented by Chemical Formula 1 below.

[Chemical Formula 1]

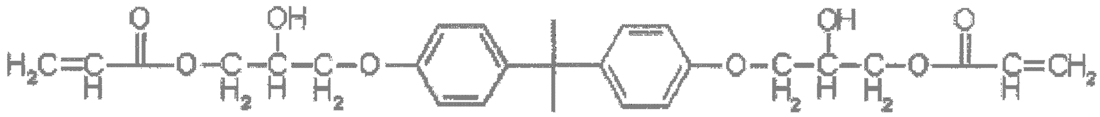

In addition, in consideration of other properties such as mechanical properties or curling properties required for the hard coating layer, in addition to the first bifunctional or higher (meth)acrylate-based compound having an aromatic ring, the second (meth)acrylate-based compound having an aromatic ring having a structure different from the first (meth)acrylate-based compound is further used.

Examples of the second (meth)acrylate-based compound include compounds having at least one, for example, two benzene rings, wherein the two benzene rings are directly connected by a single bond without a carbon-containing connecting group, and also having a monofunctional (meth)acrylate functional group. More specific examples thereof include a compound represented by Chemical Formula 2 below, or a compound having at least one, for example, one benzene ring, and having a trifunctional to hexafunctional (meth)acrylate functional group (but having a functionality different from that of the first (meth) acrylate-based compound), and more specific examples thereof include a compound represented by Chemical Formula 3 below.

[Chemical Formula 2]

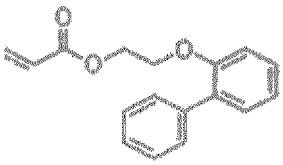

[Chemical Formula 3]

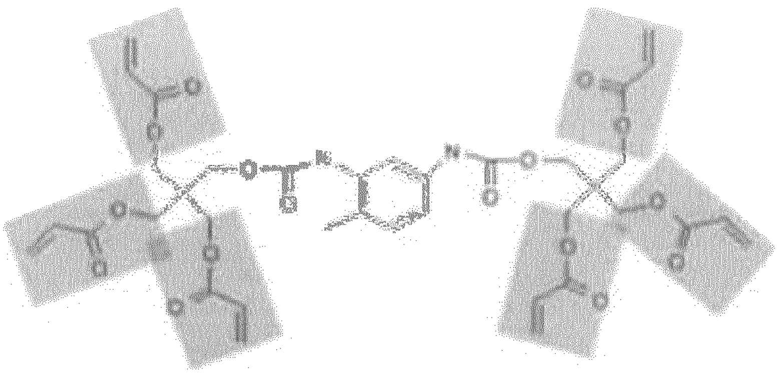

Among these, as the aromatic monofunctional (meth)acrylate-based compound including the compound of Chemical Formula 2 is used as the second (meth)acrylate-based compound, together with the first (meth)acrylate-based compound, it has been found that the generation of interference fringes can be significantly reduced while achieving a further low curling property.

The first and second (meth)acrylate-based compounds may be used so that a weight ratio of the first (meth)acrylate-based compound to the second (meth)acrylate-based compound is 1:9 to 9:1, 1:7 to 7:1 or 1:5 to 5:1, whereby the effects resulting from the combination of the two compounds are optimized, and the optical film of one embodiment can exhibit more excellent interference fringe suppressing property and curling property.

Meanwhile, the hard coating layer may be formed by a composition including a photopolymerizable compound, such as the (meth)acrylate-based compound described above, a photoinitiator and an organic solvent.

In such composition, as the photoinitiator, any photoinitiator conventionally known in the art may be used without particular limitation. Examples of the photoinitiator include at least one selected from 1-hydroxycyclohexyl phenyl ketone, benzyl dimethyl ketal, hydroxydimethyl acetophenone, benzoin, benzoin methyl ether, benzoin ethyl ether, benzoin isopropyl ether, and benzoin butyl ether. They can be used singly or in a mixture of two or more.

In this case, the photoinitiator may be added in an amount of 0.1 to 10 parts by weight, 0.5 to 7 parts by weight,

or 1.0 to 5.0 parts by weight based on 100 parts by weight of the above-described photopolymerizable compound of the (meth)acrylate-based compound. When the photoinitiator is added in an amount of less than 0.1 parts by weight based on 100 parts by weight of the photopolymerizable compound, sufficient photocuring due to ultraviolet irradiation may not occur. When the photoinitiator is added in an amount of exceeding 10 parts by weight based on 100 parts by weight of the photopolymerizable compound, the adhesion with the low refractive index layer on the hard coating layer may be reduced. Furthermore, when the photoinitiator is added in an excessively large amount, the hard coating layer and the optical film including the hard coating layer may show yellowing by the unreacted initiator over time, and the optical properties of the optical film may be deteriorated.

In addition, the composition forming a hard coating layer may further include an organic solvent. When such an organic solvent is added, there is no limitation in its composition. However, considering ensuring of appropriate viscosity of the composition and the film strength of the finally formed film, the organic solvent may be used in an amount of 50 to 700 parts by weight, 100 to 500 parts by weight, or 150 to 450 parts by weight based on 100 parts by weight of the photopolymerizable compound.

The type of the organic solvent that can be used herein is not limited in its constitution, but specific examples thereof may include at least one selected from the group consisting of lower alcohols having 1 to 6 carbon atoms, acetates, ketones, cellosolve, dimethylformamide, tetrahydrofuran, propylene glycol monomethyl ether, toluene and xylene. They may be used alone or in mixture of two or more.

Herein, examples of the lower alcohols include methanol, ethanol, isopropyl alcohol, butyl alcohol, isobutyl alcohol, or diacetone alcohol. Further, examples of the acetates may include methyl acetate, ethyl acetate, isopropyl acetate, butyl acetate, or cellosolve acetate. Examples of the ketones may include methyl ethyl ketone, methyl isobutyl ketone, acetylacetone, or acetone.

Meanwhile, the composition for forming a hard coating layer may further include at least one additive selected from the group consisting of a leveling agent, a wetting agent, a defoaming agent, and an antistatic agent. Herein, the additives may each be added in the range of 0.01 to 10 parts by weight based on 100 parts by weight of the photopolymerizable compound.

The hard coating layer may be formed by coating the composition for forming a hard coating layer described above onto one side of the polyester-based substrate film and then drying and photo-curing the composition. The conditions for drying and photocuring may comply with typical process conditions for forming a hard coating layer, and specific process conditions are described in Examples described below.

Meanwhile, the optical film of one embodiment described above may further include a primer layer formed between the substrate film and the hard coating layer. The adhesive force between the substrate film and the hard coating layer may be further improved by using such a primer layer. Furthermore, as the refractive index of the primer layer is controlled to be smaller than the refractive index of the substrate film and larger than the refractive index of the hard coating layer, the difference in refractive indexes between the layers is further reduced, and thus, the generation of interference fringes by the polyester-based substrate film can be further reduced.

For this purpose, the primer layer may have a refractive index of 1.54 to 1.60, or 1.55 to 1.57. In order to achieve the refractive index, it may include a binder layer containing a polymer resin or an organic compound, and high refractive index nanoparticles dispersed on the binder layer and having a refractive index of 1.57 or more. Herein, examples of applicable high refractive index nanoparticles include titania particles ($TiO_2$), zirconia particles ($Zr_2O_3$), and high refractive index nanosilica particles having a diameter of 200 nm or less, or a diameter of 10 to 200 nm.

In addition, the primer layer may have a thickness of, for example, 20 nm to 500 nm, or 50 nm to 500 nm, or 70 nm to 300 nm, in order not to impair the interference suppression effect (destructive interference effect) according to the thickness of the hard coating layer while appropriately improving the adhesive force between the hard coating layer and the substrate film.

Except for the appropriate refractive index and thickness described above, the primer layer may be formed by applying an appropriate composition and process of a primer layer which have conventionally been applied to improve the adhesive force of the hard coating layer from the past, and thus, additional description thereof will be omitted.

Meanwhile, the optical film of one embodiment described above may further include a low refractive index layer formed on the hard coating layer. Such a low refractive index layer may include a binder resin containing a (co)polymer of a photopolymerizable compound and hollow silica particles dispersed on the binder resin.

By including such low refractive index layer, the reflection itself on the polyester-based substrate film can be reduced, and as a result, the generation of interference fringes can be further reduced in the optical film of one embodiment. Further, by using such a low refractive index layer, it is possible to reduce a diffused reflection on the display surface of an image display device and further improve resolution and visibility.

The low refractive index layer may have a refractive index of, for example, 1.3 to 1.5, or 1.35 to 1.45, or 1.38 to 1.43, and a thickness of 1 to 300 nm, or 5 to 200 nm, or 50 nm to 150 nm, in order to effectively prevent the reflection in the substrate film and the diffused reflection on the display surface of an image display device.

One example of the optical film including the low refractive index layer and the primer layer already described

may comprise:

a polyester-based substrate film having a refractive index of 1.6 to 1.7;
a hard coating layer formed on the substrate film, having a refractive index of 1.53 to 1.60 and a thickness of 13 to 25 $\mu$m, and including a cross-linked polymer of a bifunctional or higher unsaturated compound;
a primer layer formed between the substrate film and the hard coating layer and having a refractive index smaller than that of the substrate film and larger than that of the hard coating layer; and
a low refractive index layer formed on the hard coating layer and having a refractive index of 1.3 to 1.5, wherein the hard coating layer includes a cross-linked copolymer of a first bifunctional or higher (meth)acrylate-based compound having an aromatic ring and a second (meth)acrylate-based compound having an aromatic ring with a structure different from that of the first (meth)acrylate-based compound..

Meanwhile, the low refractive index layer may be formed from a photocurable coating composition for forming a low refractive index layer including a photopolymerizable compound and hollow silica particles. Specifically, the low refractive index layer may include a binder resin including a (co)polymer of a photopolymerizable compound and hollow silica particles dispersed in the binder resin.
The photopolymerizable compound included in the low refractive index layer may include a monomer or an oligomer containing a (meth)acrylate or vinyl group. Specifically, the photopolymerizable compound may include a monomer or an oligomer containing one or more or two or more, or three or more of (meth)acrylates or vinyl groups.
Specific examples of the monomer or oligomer containing a (meth)acrylate include pentaerythritol tri(meth)acrylate, pentaerythritol tetra(meth)acrylate, dipentaerythritol penta(meth)acrylate, dipentaerythritol hexa(meth)acrylate, tripentaerythritol hepta(meth)acrylate, trilene diisocyanate, xylene diisocyanate, hexamethylene diisocyanate, trimethylolpropane tri(meth)acrylate, trimethylolpropane polyethoxy tri(meth)acrylate, trimethylolpropane trimethacrylate, ethylene glycol dimethacrylate, butanediol dimethacrylate, hexaethyl methacrylate, butyl methacrylate, or a mixture of two or more thereof, or a urethane-modified acrylate oligomer, an epoxide acrylate oligomer, a ether acrylate oligomer, a dendritic acrylate oligomer, or a mixture of two or more thereof. Herein, the molecular weight of the oligomers may be 1,000 to 10,000 or 2,000 to 7,000.
Specific examples of the monomer or oligomer containing a vinyl group include divinylbenzene, styrene, or para-methyl styrene.
Meanwhile, the photocurable coating composition for forming a low refractive index layer may further include a fluorine-based compound containing a photoreactive functional group. Accordingly, the binder resin of the low refractive index layer may include a cross-linked polymer between the photopolymerizable compound already described above and the fluorine-based compound containing a photoreactive functional group.
The fluorine-based compound containing a photoreactive functional group may include or be substituted with at least one photoreactive functional group, and the photoreactive functional group refers to a functional group which can participate in a polymerization reaction by irradiation of light, for example, by irradiation of visible light or ultraviolet light. The photoreactive functional group may include various functional groups known to be able to participate in a polymerization reaction by irradiation of light. Specific examples thereof include a (meth)acrylate group, an epoxide group, a vinyl group or a thiol group.
The fluorine-based compound containing a photoreactive functional group may have a fluorine content of 1% by weight to 25% by weight or 3% by weight to 20% by weight. When the content of fluorine in the fluorine-based compound containing a photoreactive functional group is too small, it may be difficult to sufficiently secure the physical properties such as stain resistance or alkali resistance of the low refractive index layer. In addition, when the content of fluorine in the fluorine-based compound containing a photoreactive functional group is too large, the surface properties such as scratch resistance of the low refractive index layer may be deteriorated.
The fluorine-based compound containing a photoreactive functional group may further include silicon or a silicon compound. That is, the fluorine-based compound containing a photoreactive functional group may optionally contain silicon or a silicon compound therein.
The fluorine-based compound containing a photoreactive functional group may have a weight average molecular weight (weight average molecular weight in terms of polystyrene measured by GPC method) of 2,000 to 200,000, 3,000 to 100,000, or 5,000 to 50,000. When the weight average molecular weight of the fluorine-based compound containing a photoreactive functional group is too small, the low refractive index layer obtained from the photocurable coating composition of the embodiment may not have sufficient alkali resistance. Further, when the weight average molecular weight of the fluorine-based compound containing a photoreactive functional group is too large, the low refractive index layer obtained from the photocurable coating composition of the embodiment above may not have sufficient durability or scratch resistance.
The photocurable coating composition may contain 0.1 to 50 parts by weight, or 1 to 45 parts by weight, or 10 to 42 parts by weight of the fluorine-based compound containing a photoreactive functional group based on 100 parts

by weight of the photopolymerizable compound of a monomer or oligomer containing a (meth)acrylate or vinyl group. When the fluorine-based compound containing a photoreactive functional group is added in excess relative to the photopolymerizable compound, the coating properties of the photocurable coating composition may be reduced, or the low refractive index layer obtained from the photocurable coating composition may not have sufficient durability or scratch resistance. Further, when the amount of the fluorine-based compound containing a photoreactive functional group is too small relative to the photopolymerizable compound, the low refractive index layer obtained from the photocurable coating composition may not have sufficient alkali resistance.

Meanwhile, the hollow silica particles may have a maximum diameter of less than 200 nm and refer to silica particles in which empty voids are present on the surface and/or inside of the silica particles. The hollow silica particles may have a diameter of 1 to 200 nm or 10 to 100 nm

As for the hollow inorganic nanoparticles, hollow inorganic nanoparticles whose surface is coated with a fluorine-based compound may be used either alone or in combination with hollow inorganic nanoparticles whose surface is not coated with a fluorine-based compound. When the surface of the hollow inorganic nanoparticles is coated with a fluorine-based compound, the surface energy may be further reduced. Accordingly, the hollow inorganic nanoparticles may be more uniformly distributed in the photocurable coating composition, and the durability and scratch resistance of the film obtained from the photocurable coating composition may be further improved.

In addition, the hollow silica particles may be included in the composition in a colloidal phase dispersed in a predetermined dispersion medium. The colloidal phase containing the hollow silica particles may contain an organic solvent as a dispersion medium.

Herein, examples of the organic solvent in the dispersion medium include alcohols such as methanol, isopropyl alcohol, ethylene glycol and butanol, etc.; ketones such as methyl ethyl ketone and methyl isobutyl ketone, etc.; aromatic hydrocarbons such as toluene and xylene, etc.; amides such as dimethylformamide, dimethylacetamide and N-methylpyrrolidone, etc.; esters such as ethyl acetate, butyl acetate and gamma-butylolactone, etc; ethers such as tetrahydrofuran and 1,4-dioxane, etc.; or a mixture thereof.

The photocurable coating composition may contain 10 to 500 parts by weight, or 50 to 400 parts by weight of the hollow silica particles based on 100 parts by weight of the photopolymerizable compound. When the hollow silica particles are added in an excessive amount, the scratch resistance or abrasion resistance of the coating film may be reduced due to a decrease in the binder content. Further, when the hollow silica particles are added in a small amount, uniform film formation of the hollow silica particles may not occur, and reflectivity and refractive index increase, and thereby the desired effect may not be exhibited.

As the photopolymerization initiator, any compound known to be used in the photocurable coating composition may be used without particular limitation. Specifically, a benzophenone-based compound, an acetophenone-based compound, a non-imidazole-based compound, a triazine-based compound, an oxime-based compound, or a mixture of two or more thereof may be used.

The photopolymerization initiator may be used in an amount of 1 to 100 parts by weight based on 100 parts by weight of the photopolymerizable compound. When the amount of the photopolymerization initiator is too small, the photocurable coating composition may be uncured in the photocuring step and thus residual substances may be generated. When the amount of the photopolymerization initiator is too large, the unreacted initiator may remain as impurity, or the cross-linking density may decrease, which in turn may deteriorate the mechanical properties of the prepared low refractive index layer, or significantly increase the reflectivity.

Meanwhile, the photocurable coating composition may further include an organic solvent.

Non-limiting examples of the organic solvent include ketones, alcohols, acetates and ethers, or mixtures of two or more thereof.

Specific examples of the organic solvent include ketones such as methyl ethyl ketone, methyl isobutyl ketone, acetylacetone or isobutyl ketone, etc.; alcohols such as methanol, ethanol, n-propanol, i-propanol, n-butanol, i-butanol or t-butanol, etc.; acetates such as ethyl acetate, i-propyl acetate, or polyethylene glycol monomethyl ether acetate, etc.; ethers such as tetrahydrofuran or propylene glycol monomethyl ether, etc.; or a mixture of two or more thereof.

The organic solvent may be added at the time of mixing the respective components to be included in the photocurable coating composition, or may be included in the photocurable coating composition while the respective components are added to the organic solvent in a dispersed or mixed state.

When the content of the organic solvent in the photocurable coating composition is too small, the flowability of the photocurable coating composition may be reduced, resulting in a defect such as generation of streaks in the finally prepared film. Further, when the organic solvent is added in an excessive amount, the solid content is lowered, and the coating and film formation are not sufficient, so that the physical properties or the surface properties of the film may be reduced, and defects may occur during the drying and curing processes. Accordingly, the photocurable coating composition may contain the organic solvent such that the concentration of the total solid content of the components contained therein may be 1% by weight to 50% by weight or 2% by weight to 20% by weight.

Meanwhile, the low refractive index layer included in the optical film of one embodiment described above may

be obtained by coating the photocurable coating composition onto the hard coating layer and drying and photocuring the coated product. The specific process conditions for the low refractive index layer may be based on the conditions obvious to those skilled in the art, and are also specifically described in Examples described below. Thus, additional description thereof will be omitted

Meanwhile, the optical film of one embodiment may significantly reduce the generation of interference fringes derived from the polyester-base substrate film, and this can be clearly confirmed by the observational results on the presence or absence of rainbow stains as shown in FIG. 1. Furthermore, the optical film of one embodiment exhibits a low curling property and thus can be preferably applied as a polarizer protective film.

Such low curling property can be confirmed by preparing the optical film into a 10 cm x 10 cm specimen and then measuring the average value (*i.e.*, the degree of occurrence of curl) of the distance at which each vertex is spaced from the plane when the specimen is placed on the plane. The optical film of one embodiment may exhibit a low curling property of 20 mm or less, or 1 to 20 mm which is measured by the method described above.

Meanwhile, according to another embodiment, there is provided a polarizing plate comprising a polarizing element and the above-described optical film formed on the polarizing element. In addition, according to still another embodiment, there is provided an image display device comprising the optical film or the polarizing plate.

One example of such image display device may be composed as follows:

The image display device may be a liquid crystal display device comprising: a pair of polarizing plates facing each other; a thin film transistor, a color filter, and a liquid crystal cell sequentially stacked between the pair of polarizing plates; and a backlight unit. In addition, a polarizing element and the above-described optical film formed on the polarizing element may be included at least on the image display surface of the polarizing plate among the polarizing plates.

According to the present invention, there is provided an optical film which minimizes the generation of interference fringes and also exhibits an excellent curling property, even while including a polyester-based substrate film, compared to the case where a cellulose ester-based substrate is applied, thereby being suitably applied as a polarizer protective film.

In addition, there may be provided a polarizing plate exhibiting excellent properties and an image display device exhibiting high visibility by using the optical film.

## [BRIEF DESCRIPTION OF THE DRAWINGS]

FIG. 1 is an image showing that no interference fringe (rainbow stain) was observed in the optical film prepared in Example 3.

FIGS. 2 and 3 are images showing that interference fringes (rainbow stains) were observed in the optical films prepared in Comparative Examples 4 and 8, respectively.

## [DETAILED DESCRIPTION OF THE EMBODIMENTS]

Specific embodiments of the present invention will be described in more detail by way of Examples. However, the Examples are for illustrative purposes only, and the disclosure of the specific embodiments of the invention is not intended to be limited by these Examples.

### <Preparation Examples: Preparation of composition for forming hard coating layer and photocurable coating composition for forming low refractive index layer>

### (1) Preparation of composition for forming hard coating layer

A composition for forming a hard coating layer was prepared by uniformly mixing the components of Table 1 below. The contents of all components used in Table 1 are expressed in the unit of parts by weight.

[Table 1]

| | | Preparation Example 1 | Preparation Example 2 | Preparation Example 3 | Preparation Example 4 | Comparative Preparation Example 1 | Comparative Preparation Example 2 |
|---|---|---|---|---|---|---|---|
| Binder | EB600 | 40 | 23.8 | 23.8 | 17.85 | | |
| | OPPEA | 7.6 | 23.8 | | 11.9 | | |
| | UA-306T | | | 23.8 | 17.85 | | |
| | PETA | | | | | 47.6 | |
| | DPHA | | | | | | 47.6 |
| Initiator | I184 | 1.2 | 1.2 | 1.2 | 1.2 | 1.2 | 1.2 |
| | D1173 | 1.2 | 1.2 | 1.2 | 1.2 | 1.2 | 1.2 |
| Solvent | CyH | 15 | 15 | 15 | 15 | 15 | 15 |
| | MEK | 35 | 35 | 35 | 35 | 35 | 35 |
| Sum | | 100 | 100 | 100 | 100 | 100 | 100 |

1) EB600: Compound of Chemical Formula 1 below

[Chemical Formula 1]

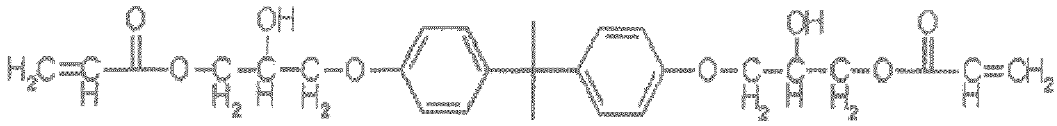

2) OPPEA: Compound of Chemical Formula 2 below

[Chemical Formula 2]

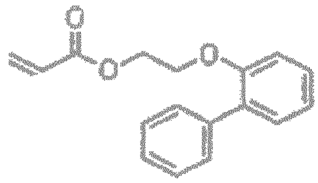

3) UA-306T: Compound of Chemical Formula 3 below

[Chemical Formula 3]

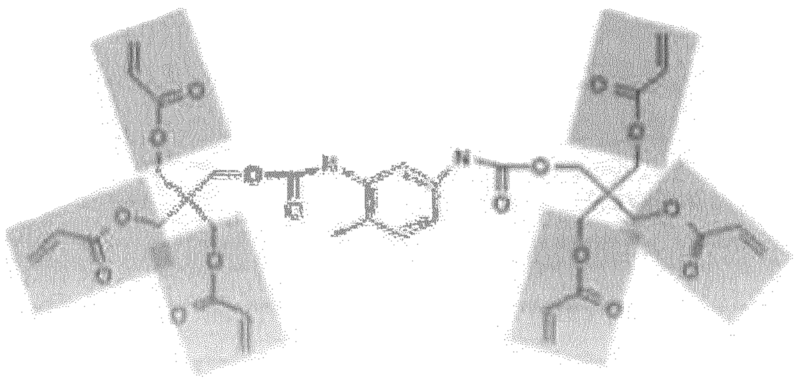

4) PETA: Pentaerythritol triacrylate
5) DPHA: Dipentaerythritol hexaacrylate
6) I184(Irgacure 184): Photoinitiator, manufactured by Ciba.
7) D1173: Photoinitiator, manufactured by Ciba.
8) MEK: Methyl ethyl ketone
9) CyH: Cyclohexane

**(2) Preparation of photocurable coating composition for forming low refractive index layer**

The remaining components in Table 2 were mixed and then the mixture was diluted with a mixed solution (weight ratio) of MIBK (methyl isobutyl ketone) and IPA to prepare a photocurable coating composition for forming a low refractive index layer. The contents of all components used in Table 2 are expressed in parts by weight.

[Table 2]

| | Preparation Example 5 |
|---|---|
| DPHA | 1.37 |

(continued)

| | Preparation Example 5 |
|---|---|
| THRULYA 4320 | 4.52 |
| Irgacure-127 | 0.55 |
| RS-907 | 0.5 |
| IPA | 46.53 |
| MIBK | 46.53 |
| Sum | 100 |

1) DPHA: Dipentaerythritol hexaacrylate, molecular weight of 524.51 g/mol, manufactured by Kyoeisha.
2) THRULYA 4320: Hollow silica liquid dispersion, solid content of 20% by weight in MIBK solvent, manufactured by Catalysts and Chemicals Ltd.
3) Irgacure-127 Photoinitiator, manufactured by BASF.
4) RS-907: Fluorine-based compound containing a photoreactive functional group, solid content of 30% by weight in MIBK solvent, manufactured by DIC.

**<Examples and Comparative Examples: Preparation of optical film>**

As shown in Tables 3 and 4 below, the hard coating composition prepared in each of Preparation Examples 1 to 4 and Comparative Preparation Examples 1 and 2 was coated onto a PET substrate film (manufactured by Toyobo, TA048) having a thickness of 100 $\mu$m and a refractive index of 1.65, onto which a primer layer having a refractive index of 1.57 and a thickness of 100 nm was coated. The coated product was dried at 90°C for 1 minute and then irradiated with ultraviolet rays of 150 mJ/cm$^3$ to prepare a hard coating layer.

Then, according to Examples/Comparative Examples, in the case of including a low refractive index layer, such a low refractive index layer was formed as follows.

The composition prepared in Preparation Example 5 was coated onto the hard coating layer with Meyer Bar #3 and dried at 90°C for 1 minute. The thus-dried product was irradiated with ultraviolet rays of 180 mJ/cm$^2$ under nitrogen purging to prepare a low refractive index layer having a thickness of 100 nm. Thereby, an optical film was prepared.

**<Experimental Examples: Measurements of physical properties of optical film>**

The physical properties of the optical film prepared above were measured according to the following methods, and the results are shown together with the composition in Tables 3 and 4 below.

**1. Measurement of refractive index**

The refractive indexes of the substrate film, the hard coating layer and the low refractive index layer included in the optical film were measured using an ellipsometer; the refractive index of each coating layer coated onto a wafer was measured. More specifically, the coating composition was coated onto a 3cm X 3cm wafer, and the coating was carried out using a spin coater (coating condition: 1500 rpm, 30 seconds). Then, the coated product was dried at 90°C for 2 minutes and irradiated with ultraviolet rays of 180 mJ/cm$^2$ under nitrogen purging to prepare each coating layer having a thickness of 100 nm.

An incidence angle of 70° was applied to the coating layer using a refractive index measuring instrument (Model: M-2000) manufactured by J. A. Woollam Co., and linear polarization was measured at a wavelength range of 380 nm to 1000 nm. The measured light polarization measurement data (ellipsometry data ($\Psi$,$\Delta$)) was fitted to the Cauchy model of General Formula 1 below using Complete EASE software so that the MSE was 3 or less.

$$n(\lambda) = A + \frac{B}{\lambda^2} + \frac{C}{\lambda^4}$$

wherein, n($\lambda$) is the refractive index at wavelength of 300 nm to 1800 nm, and A, B and C are the Cauchy parameters.

**2. Evaluation of the generation of interference fringe - the degree of generation of rainbow stains/measurement of rainbow variation rate**

In the optical films prepared in Examples and Comparative Examples, a black tape (Vinyl tape 472 Black, manufactured by 3M Company) was attached to the surface on which the hard coating layer was not formed to prevent a light from being transmitted. Then, a reflection image was photographed using a three-wavelength light source. The size of the photographed image was 640 × 480 pixels, and the amount of light was adjusted within the range of 70% of the maximum amount of light emitted from the three-wavelength lamp.

The presence or absence of rainbow stains which exist on the surface of the optical film was observed in the used images and evaluated according to the following criteria. The evaluation results are shown in Tables 3 and 4 below, and reflection images of the optical films prepared in Example 3, Comparative Examples 4 and 8 are shown in FIGS. 1 to 3, respectively.

<Measurement criteria>

None: No rainbow stains are present.
Weak: The space between the rainbow is 0.2mm or less, and no complementary colors of rainbow such as red and green are observed
Moderate: The space between the rainbow is 0.2mm or more, and complementary colors of rainbow such as red and green are observed. Rainbow is weakly visible under a typical fluorescent light source.
Strong: Complementary colors of rainbow such as red and green are clearly observed. Complementary rainbow is strongly visible even under a typical fluorescent light source, but not under a three-wavelength lamp.

In addition, the rainbow variation rate is a value obtained by quantifying the intensity of the rainbow using the fact that as the rainbow is stronger, the vibration width increases during measurement of 5-degree reflectivity. The 5-degree reflectivity of each film was measured, and the difference between the maximum reflectivity value and the minimum reflectivity value at a wavelength range of 450 nm to 650 nm was divided by the average reflectivity value to calculate the variation rate. The film required for the analysis was cut into a size of 4 cm x 4 cm, and a black tape (Vinyl tape 472 Black, manufactured by 3M Co., Ltd.) was attached to the opposite side of the coating layer to be measured. Then, the measurement was performed using an UV-VIS spectrometer (Model name: UV2550) manufactured by Shimadzu at a wavelength range of 380 nm to 780 nm under the 5-degree reflectivity mode with a slit width of 2nm, and the results are shown in Tables 3 and 4.

**3. Evaluation of curling property**

The average value (*i.e.*, the degree of occurrence of curl) of the distance at each vertex is spaced from the plane was measured when the 10 cm x 10 cm specimen of the optical film was placed on the plane, and the results are shown in Tables 3 and 4.

[Table 3]: Examples

| | Example 1 | Example 2 | Example 3 | Example 4 | Example 5 | Example 6 |
|---|---|---|---|---|---|---|
| Substrate film | TA048 | TA048 | TA048 | TA048 | TA048 | TA048 |
| Refractive index of substrate film | 1.6~1.7 (Double refraction) | 1.6~1.7 (Double refraction) | 1.6~1.7 (Double refraction) | 1.6~1.7 (Double refraction) | 1.6~1.7 (Double refraction) | 1.6~1.7 (Double refraction) |
| Composition of hard coating layer | Preparation Example 1 | Preparation Example 1 | Preparation Example 1 | Preparation Example 4 | Preparation Example 2 | Preparation Example 3 |
| Thickness of hard coating layer ($\mu$m) | 18 | 18 | 25 | 18 | 17 | 18 |
| Refractive index of hard coating layer | 1.56 | 1.56 | 1.56 | 1.55 | 1.56 | 1.54 |

(continued)

| | Example 1 | Example 2 | Example 3 | Example 4 | Example 5 | Example 6 |
|---|---|---|---|---|---|---|
| Low refractive index layer | Not formed | Formed | Formed | Formed | Not formed | Not formed |
| Thickness of low refractive index layer (nm) | X | 100 | 100 | 100 | X | X |
| Refractive index of low refractive index layer | X | 1.41 | 1.41 | 1.41 | X | X |
| Rainbow stains | None | None | None | None | None | None |
| Variation rate of rainbow stains | - | 0.27 | 0.28 | 0.35 | 0.21 | 0.31 |
| Curling property (mm) | 3.4 | 3.8 | 11 | 18 | 2 | 20 |

[Table 4]: Comparative Example

| | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 |
|---|---|---|---|---|---|---|---|---|---|
| Substrate film | TA048 | TA048 | TA048 | TA048 | TA048 | TA048 | TA048 | TA048 | TA048 |
| Refractive index of substrate film | 1.6~1.7 (Double refraction ) | 1.6~1.7 (Double refraction ) | 1.6~1.7 (Double refraction ) | 1.6~1.7 (Double refraction ) | 1.6~1.7 (Double refraction ) | 1.6~1.7 (Double refraction ) | 1.6~1.7 (Double refraction ) | 1.6~1.7 (Double refraction ) | 1.6~1.7 (Double refraction ) |
| Composition of hard coating layer | Preparation Example 1 | Preparation Example 1 | Preparation Example 1 | Preparation Example 1 | Preparation Example 4 | Preparation Example 4 | Preparation Example 4 | Comparative Preparation Example 1 | Comparative Preparation Example 2 |
| Thickness of hard coating layer ($\mu m$) | 5 | 5 | 12 | 5 | 40 | 12.5 | 10 | 18 | 18 |
| Refractive index of hard coating layer | 1.56 | 1.56 | 1.56 | 1.56 | 1.55 | 1.55 | 1.55 | 1.52 | 1.53 |
| Low refractive index layer | Not formed | Formed | Formed | Formed | Formed | Formed | Formed | Not formed | Not formed |
| Thickness of low refractive index layer (nm) | X | 100 | 100 | 100 | 100 | 100 | 100 | X | X |
| Refractive index of low refractive index layer | X | 1.41 | 1.41 | 1.41 | 1.41 | 1.41 | 1.41 | X | X |
| Rainbow stains | Moderate | Strong | Weak | Strong | Weak | Weak | Moderate | Strong | Moderate |
| Variation rate of rainbow stains | - | 1.02 | 0.5 | 1.11 | 0.29 | 0.51 | 0.7 | 1.08 | 0.50 |
| Curling property (mm) | 2 | 3 | 3 | 2 | >50 | 13 | 10.5 | >50 | >50 |

Referring to Tables 3 and 4, it was confirmed that, in the optical films of Examples, rainbow stains were not generated and the generation of interference fringes by the substrate base film was significantly suppressed, as compared to Comparative Examples. In addition, it was confirmed that the optical films of Examples exhibited excellent curling properties which can be applied to optical films for protecting a polarizer, while suppressing the generation of interference fringes.

## Claims

**1.** An optical film for protecting a polarizer comprising:

a polyester-based substrate film having a refractive index measured as described in the description of 1.6 to 1.7; and
a hard coating layer formed on the substrate film and having a refractive index of 1.53 to 1.60 and a thickness of 13 to 25 $\mu$m,
wherein the hard coating layer includes a cross-linked copolymer of a first bifunctional or higher (meth)acrylate-based compound having an aromatic ring and a second (meth)acrylate-based compound having an aromatic ring with a structure different from that of the first (meth)acrylate-based compound.

**2.** The optical film for protecting a polarizer of claim 1, wherein the polyester-based substrate film is a polyethylene terephthalate (PET)-based substrate film having a thickness of 30 to 200 $\mu$m.

**3.** The optical film for protecting a polarizer of claim 1, wherein the first (meth)acrylate-based compound is a polyfunctional compound having at least one benzene ring and a polyfunctional compound having a bifunctional to hexafunctional (meth)acrylate group, and
the second (meth)acrylate-based compound is a compound having at least one benzene ring, having a number of benzene rings or a structure of a linking group of the benzene rings different from those of the first (meth)acrylate-based compound, and having a monofunctional or trifunctional to hexafunctional (meth)acrylate functional group.

**4.** The optical film for protecting a polarizer of claim 1, wherein the first (meth)acrylate-based compound and the second (meth)acrylate-based compound are used at a weight ratio of 1:9 to 9:1.

**5.** The optical film for protecting a polarizer of claim 1, further comprising a primer layer formed between the substrate film and the hard coating layer,
wherein the primer layer has a refractive index which is smaller than that of the substrate film and larger than that of the hard coating layer.

**6.** The optical film for protecting a polarizer of claim 5, wherein the primer layer includes a binder layer and high refractive index nanoparticles dispersed on the binder layer having a refractive index of 1.57 or more.

**7.** The optical film for protecting a polarizer of claim 5, wherein the primer layer has a thickness of 20 nm to 500 nm.

**8.** The optical film for protecting a polarizer of claim 1, further comprising a low refractive index layer formed on the hard coating layer and including a binder resin containing a (co)polymer of a photopolymerizable compound and hollow silica particles dispersed on the binder resin.

**9.** The optical film for protecting a polarizer of claim 8, wherein the low refractive index layer has a refractive index of 1.3 to 1.5 and a thickness of 1 to 300 nm.

**10.** The optical film for protecting a polarizer of claim 1, wherein the curl property measured for a 10 cm x 10 cm specimen of the optical film is 20 mm or less.

**11.** An optical film for protecting a polarizer comprising:

a polyester-based substrate film having a refractive index measured as described in the description of 1.6 to 1.7;
a hard coating layer formed on the substrate film, having a refractive index of 1.53 to 1.60 and a thickness of 13 $\mu$m to 25 $\mu$m, and including a cross-linked polymer of a bifunctional or higher unsaturated compound;
a primer layer formed between the substrate film and the hard coating layer and having a refractive index smaller

than that of the substrate film and larger than that of the hard coating layer; and
a low refractive index layer formed on the hard coating layer and having a refractive index of 1.3 to 1.5, wherein the hard coating layer includes a cross-linked copolymer of a first bifunctional or higher (meth)acrylate-based compound having an aromatic ring and a second (meth)acrylate-based compound having an aromatic ring with a structure different from that of the first (meth)acrylate-based compound.

**12.** A polarizing plate comprising a polarizing element and the optical film of claim 1 or 10 formed on the polarizing element.

**13.** An image display device comprising the optical film of claim 1 or 11, or the polarizing plate of claim 12.

## Patentansprüche

**1.** Optischer Film zu Schützen eines Polarisators umfassend:

einen polyesterbasierten Substratfilm mit einem Brechungsindex, gemessen wie in der Beschreibung angegeben, von 1,6 bis 1,7; und
eine harte Beschichtungsschicht, die auf dem Substratfilm gebildet ist und die einen Brechungsindex von 1,53 bis 1,60 und eine Dicke von 13 bis 25 μm hat,
wobei die harte Beschichtungsschicht ein quervernetztes Copolymer einer ersten bi- oder höher funktionellen (Meth)acrylat-basierten Verbindung mit einem aromatischen Ring und einer zweiten (Meth)acrylat-basierten Verbindung mit einem aromatischen Ring mit einer Struktur, die sich von der ersten (Meth)acrylat-basierten Verbindung unterscheidet, einschließt.

**2.** Optischer Film zum Schützen eines Polarisators nach Anspruch 1, wobei der Polyester-basierte Substratfilm ein Polyethylenterepththalat (PET)-basierter Substratfilm mit einer Dicke von 30 bis 200 μm ist.

**3.** Optischer Film zum Schützen eines Polarisators nach Anspruch 1, wobei die erste (Meth)acrylat-basierte Verbindung eine polyfunktionelle Verbindung mit zumindest einem Benzolring und eine polyfunktionelle Verbindung mit einer bifunktionellen bis hexafunktionellen (Meth)acrylatgruppe ist, und
die zweite (Meth)acrylat-basierte Verbindung eine Verbindung mit zumindest einem Benzolring , mit einer Anzahl von Benzolringen oder einer Struktur einer verknüpfenden Gruppe der Benzolringe ist, die sich von denen der ersten (Meth)acrylat basierten Verbindung unterschiedet und mit einer monofunktionellen oder trifunktionellen bis hexafunktionellen (Meth)acrylat funktionellen Gruppe.

**4.** Optischer Film zum Schützen eines Polarisators nach Anspruch 1, wobei die erste (Meth)acrylat-basierte Verbindung und die zweite (Meth)acrylat-basierte Verbindung in einem Gewichtsverhältnis von 1:9 bis 9:1 verwendet werden.

**5.** Optischer Film zum Schützen eines Polarisators nach Anspruch 1, ferner umfassend eine Grundierungsschicht, die zwischen dem Substratfilm und der harten Beschichtungsschicht gebildet ist,
wobei die Grundierungsschicht einen Brechungsindex hat, der kleiner ist als der des Substratfilms und größer ist als der der harten Beschichtungsschicht.

**6.** Optischer Film zum Schützen eines Polarisators nach Anspruch 5, wobei die Grundierungsschicht eine Bindemittelschicht und Nanopartikel mit hohem Brechungsindex, die in der Bindemittelschicht dispergiert sind und einen Brechungsindex von 1,57 oder mehr haben, einschließt.

**7.** Optischer Film zum Schützen eines Polarisators nach Anspruch 5, wobei die Grundierungsschicht eine Dicke von 20 nm bis 500 nm hat.

**8.** Optischer Film zum Schützen eines Polarisators nach Anspruch 1, ferner umfassend eine Schicht mit niedrigem Brechungsindex, die auf der harten Beschichtungsschicht gebildet ist und ein Bindemittelharz einschließt, das ein (Co)polymer einer photopolymerisierbaren Verbindung ist, und hohle Silicapartikel, die in dem Bindemittelharz dispergiert sind, einschließt.

**9.** Optischer Film zum Schützen eines Polarisators nach Anspruch 8, wobei die Schicht mit niedrigem Brechungsindex einen Brechungsindex von 1,3 bis 1,5 und eine Dicke von 1 bis 300 nm hat.

10. Optischer Film zum Schützen eines Polarisators nach Anspruch 1, wobei die Rollneigungseigenschaft, gemessen für einen 10 cm x 10 cm Prüfling des optischen Films, 20 mm oder weniger ist.

11. Optischer Film zum Schützen eines Polarisators umfassend:

einen polyesterbasierten Substratfilm mit einem Brechungsindex, gemessen wie in der Beschreibung angegeben, von 1,6 bis 1,7;
eine harte Beschichtungsschicht, die auf dem Substratfilm gebildet ist, mit einem Brechungsindex von 1,53 bis 1,60 und einer Dicke von 13 μm bis 25 μm, die ein quervernetztes Polymer einer bi- oder höher funktionellen ungesättigten Verbindung einschließt;
eine Grundierungsschicht, die zwischen dem Substratfilm und der harten Beschichtungsschicht gebildet ist, mit einem Brechungsindex, der kleiner ist als der des Substratfilms und größer ist als der der harten Beschichtungsschicht; und
einer Schicht mit niedrigem Brechungsindex, die auf der harten Beschichtungsschicht gebildet ist und die einen Brechungsindex von 1,3 bis 1,5 hat, wobei die harte Beschichtungsschicht ein quervernetztes Copolymer einer ersten bi- oder höher funktionellen (Meth)acrylat-basierten Verbindung mit einem aromatischen Ring und einer zweiten (Meth)acrylat-basierte Verbindung mit einem aromatischen Ring, deren Struktur sich von der der ersten (Meth)acrylat-basierten Verbindung unterscheidet, einschließt.

12. Polarisatorplatte, die ein polarisierendes Element und den optischen Film nach einem der Ansprüche 1 bis 10, gebildet auf dem polarisierenden Element, umfasst.

13. Bildanzeigevorrichtung, die den optischen Film nach Anspruch 1 bis 11 oder die Polarisatorplatte nach Anspruch 12 umfasst.

## Revendications

1. Film optique pour la protection d'un polariseur comprenant :

un film substrat à base de polyester ayant un indice de réfraction mesuré comme décrit dans la description de 1,6 à 1,7 ;
et
une couche de revêtement dure formée sur le film de substrat et ayant un indice de réfraction de 1,53 à 1,60 et une épaisseur de 13 à 25 μm,
dans lequel la couche de revêtement dure contient un copolymère réticulé d'un premier composé bifonctionnel ou d'un composé à base d'une teneur plus élevée en (méth)acrylate ayant un cycle aromatique et d'un deuxième composé à base de (méth)acrylate ayant un cycle aromatique avec une structure différente de celle du premier composé à base de (méth)acrylate.

2. Film optique pour la protection d'un polariseur selon la revendication 1, dans lequel le film substrat à base de polyester est un film substrat à base de polyéthylène téréphtalate (PET) ayant une épaisseur de 30 à 200 μm.

3. Film optique pour la protection d'un polariseur selon la revendication 1, dans lequel le premier composé à base de (méth)acrylate est un composé polyfonctionnel ayant au moins un cycle benzène et un composé polyfonctionnel ayant un groupe (méth)acrylate bifonctionnel à hexafonctionnel, et
le deuxième composé à base de (méth)acrylate est un composé ayant au moins un cycle benzénique, ayant un certain nombre de cycles benzéniques ou une structure d'un groupe de liaison des cycles benzéniques différents de ceux du premier composé à base de (méth)acrylate et ayant un groupe fonctionnel de (méth)acrylate monofonctionnel ou trifonctionnel à hexafonctionnel.

4. Film optique pour la protection d'un polariseur selon la revendication 1, dans lequel le premier composé à base de (méth)acrylate et le deuxième composé à base de (méth)acrylate sont utilisés dans un rapport pondéral de 1 : 9 à 9 : 1.

5. Film optique pour la protection d'un polariseur selon la revendication 1, comprenant en outre une couche primaire formée entre le film substrat et la couche de revêtement dure,
dans lequel la couche d'apprêt a un indice de réfraction qui est inférieur à celui du film substrat et supérieur à celui de la couche de revêtement dure.

**6.** Film optique pour la protection d'un polariseur selon la revendication 5, dans lequel la couche primaire contient une couche de liant et des nanoparticules à indice de réfraction élevé dispersées sur la couche de liant ayant un indice de réfraction de 1,57 ou supérieur.

**7.** Film optique pour la protection d'un polariseur selon la revendication 5, dans lequel la couche d'apprêt a une épaisseur de 20 nm à 500 nm.

**8.** Film optique pour la protection d'un polariseur selon la revendication 1, comprenant en outre une couche à faible indice de réfraction formée sur la couche de revêtement dure et contenant une résine liante contenant un (co)polymère d'un composé photopolymérisable et des particules de silice creuses dispersées sur la résine liante.

**9.** Film optique pour la protection d'un polariseur selon la revendication 8, dans lequel la couche à faible indice de réfraction a un indice de réfraction de 1,3 à 1,5 et une épaisseur de 1 à 300 nm.

**10.** Film optique pour la protection d'un polariseur selon la revendication 1, dans lequel la propriété de bouclage mesurée pour un échantillon de 10 cm x 10 cm du film optique est de 20 mm ou inférieure.

**11.** Film optique pour la protection d'un polariseur comprenant :

un film substrat à base de polyester ayant un indice de réfraction mesuré comme décrit dans la description de 1,6 à 1,7 ;

une couche de revêtement dure formée sur le film substrat, ayant un indice de réfraction de 1,53 à 1,60 et une épaisseur de 13 $\mu m$ à 25 $\mu m$ et contenant un polymère réticulé d'un composé bifonctionnel ou ayant une plus forte teneur en contenu insaturé ;

une couche primaire formée entre le film de substrat et la couche de revêtement dure et ayant un indice de réfraction inférieur à celui du film de substrat et supérieur à celui de la couche de revêtement dure ; et

une couche à faible indice de réfraction formée sur la couche de revêtement dure et ayant un indice de réfraction de 1,3 à 1,5, la couche de revêtement dure comprenant un copolymère réticulé d'un premier composé bifonctionnel ou à base d'une teneur plus élevée en {méth)acrylate ayant un cycle aromatique et un deuxième composé à base de (méth)acrylate ayant un cycle aromatique avec une structure différente de celle du premier composé à base de (méth)acrylate.

**12.** Plaque polarisante comprenant un élément polarisant et le film optique selon la revendication 1 ou 10 formé sur l'élément polarisant.

**13.** Dispositif d'affichage d'image comprenant le film optique selon la revendication 1 ou 11 ou la plaque polarisante selon la revendication 12.

【FIG. 1】

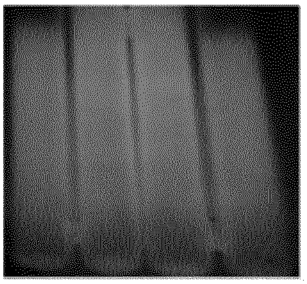

【FIG. 2】

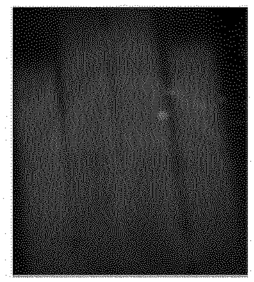

【FIG. 3】

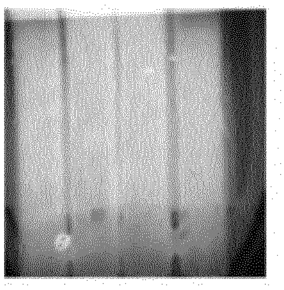

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020160096442
- KR 1020170095824
- KR 20160083585 A
- JP 2013174856 A